# EUROPEAN PATENT SPECIFICATION

(11) **EP 3 003 066 B1**
(45) Date of publication and mention of the grant of the patent: **02.05.2018**
(21) Application number: 14726605.0
(22) Date of filing: 27.05.2014
(51) Int. Cl.: A23L 2/46, A23L 3/18, A23L 3/20, A23L 3/22

(54) **A METHOD AND SYSTEM FOR PROVIDING A HEAT TREATED LIQUID PRODUCT**
VERFAHREN UND SYSTEM ZUR BEREITSTELLUNG EINES WÄRMEBEHANDELTEN FLÜSSIGPRODUKTS
PROCÉDÉ ET SYSTÈME PERMETTANT D'OBTENIR UN PRODUIT LIQUIDE TRAITÉ THERMIQUEMENT

(30) Priority: 31.05.2013 SE 1350672
(43) Date of publication of application: 13.04.2016
(73) Proprietor: Tetra Laval Holdings & Finance S.A., 1009 Pully (CH)
(72) Inventor: SIMONSSON, Micael, S-224 66 Lund (SE); STJERNBERG, Göran, S-224 75 Lund (SE)
(74) Representative: Tetra Pak - Patent Attorneys SE
(86) International application number: PCT/EP2014/060937
(87) International publication number: WO 2014/191404

(56) References cited:
- EP-A1- 0 166 127
- EP-A1- 1 719 419
- DE-A1- 3 205 982
- FR-A1- 2 340 271
- US-A1- 2002 172 745
- US-A1- 2009 038 267
- US-A1- 2012 015 088

## Description

### Technical Field

The present invention relates to a method for providing a heat treated liquid food product.

### Background

In modern liquid processing systems heat treatment is often desirable for making the final product stable during subsequent processing and storage. Such heat treatment is normally performed by heating the liquid product to an elevated temperature, which temperature is sufficient to at least prevent microbial growth in the liquid product, as well as keeping the liquid product at that particular temperature for a specific period of time before the liquid product is cooled.

Traditionally liquid products are made by mixing and blending ingredients and water followed by heat treatment during which the blended product is pasteurized and/or sterilized. An example of such processes is disclosed in US 2009/0038267 A1. The required heat treatment of the liquid product is associated with energy costs. Furthermore, the devices involved in the heat treatment, such as heat exchangers, have to be compatible with the specific liquid product being processed. Parameters such as fluid viscosity have impact on the design of the heat exchanger being used. Hence, depending on the type of liquid product currently being processed different heat exchangers have to be used.

Hence, an improved method and system for heat treating a liquid product would be advantageous.

### Summary

It is, therefore, an object of the present invention to overcome or alleviate the above described problems.

A basic idea is to provide a heat treatment method, in which water and sugar solutions are heated or pasteurized separately by using a heat treatment equipment, such as an exchanger or via steam injection, and wherein the heated pasteurized water and sugar solutions are used for combining ingredients to form a liquid food product, thereby heat treating the liquid food product for reducing a number of microorganisms present in the ingredients. Hence, unlike the commonly used approach, the liquid food product is heat treated during the combining by the heated or pasteurized water and sugar solutions. Thus, there is no need to supply the combined liquid food product to a heat exchanger or other heat treatment equipment for pasteurization or sterilization. Instead, the heat treated liquid food product may after combining cool down if needed to filling temperature and proceed directly to filling.

A system for providing a heat treated liquid product is described in connection with the inventive method. The system comprises a first supply comprising a concentrate having a water content being less than that of the desired liquid product; a second supply of water and/or sugar solution; a first heat treatment device connected to the second supply and being arranged to heat the water or sugar solution to a predetermined temperature for reducing a number of microorganisms in the water or sugar solution; at least one combiner connecting the first supply with the heat treatment device, and configured to combine the heated water or sugar solution with the concentrate to form a liquid product, wherein the predetermined temperature of the water or sugar solution is set such as to reduce a number of microorganisms of the liquid product by means of the heat energy of the heated water and/or sugar solution.

The system may further comprise a holding cell, and the predetermined temperature may be in the range of 95 to 98ºC. Correspondingly, a combining temperature of the liquid product during heat treatment in the combiner may be in the range of 85 to 87 ºC.

A combining ratio of the liquid product between the concentrate and water or sugar solution may be in the range of 10 to 30 % concentrate and 70 to 90% water and/or sugar solution.

The system may further comprise a third supply comprising a sugar solution, and wherein the second supply comprises water.

The system may further comprise a second heat treatment device connected to the third supply for heat treating the sugar solution, wherein the heat treated sugar solution is connected to the combiner.

The third supply of sugar solution may be connected to the first heat treatment device, optionally via a combiner, for heat treating the combined water and sugar solution.

The system may further comprise at least one additional concentrate supply being connected to the combiner.

The third supply of sugar solution may be connected to the first heat treatment device for heat treating the combined water and sugar solution.

The system may further comprise a heat exchanger being arranged to receive the heat treated liquid product and being configured to extract heat from the heat treated liquid product, wherein the extracted heat is brought back to the first heat treatment device to be used in the heat treatment of the water or sugar solution.

According to the invention, a method for providing a heat treated liquid food product is provided. The method comprises the steps of providing a flow of concentrate having a water content being less than that of the liquid food product; providing a flow of water being separated from said flow of concentrate; heating the flow of water to a predetermined temperature; combining the flow of concentrate with the flow of heated water to form a liquid food product; and reducing a number of microorganisms of the liquid food product by means of the heat energy of the heated water.

The method further comprises the steps of: providing a flow of sugar solution, and heat treating the flow of sugar solution, wherein the step of combining said flow of concentrate with said flow of water further includes combining with said flow of sugar solution.

The step of heat treating the flow of water and/or the step of heat treating the flow of sugar solution may be performed by steam injection, or heating by means of a heat exchanger.

A computer-readable medium having embodied thereon a computer program for processing by a processor is described in connection with the inventive method. The computer program comprises code segments arranged, when run by an apparatus having computer-processing properties, for performing all of the steps of the method according to the second aspect.

A liquid food product is provided. The liquid food product, preferably a liquid food product such as a low acid beverage, is manufactured by the method according to the invention.

A combiner is described in connection with the inventive method. The combiner comprises a first inlet for receiving a concentrate, a second inlet for receiving a heated water and/or sugar solution at a predetermined temperature, and a combining chamber for combining the concentrate and the heated water and/or sugar solution into a liquid product, wherein the predetermined temperature of the water or sugar solution is set such as at least allow for a reduction of a number of microorganisms of the liquid product using the heat energy of the heated water and/or sugar solution, and an outlet for outputting the heat treated liquid product.

### Brief Description of Drawings

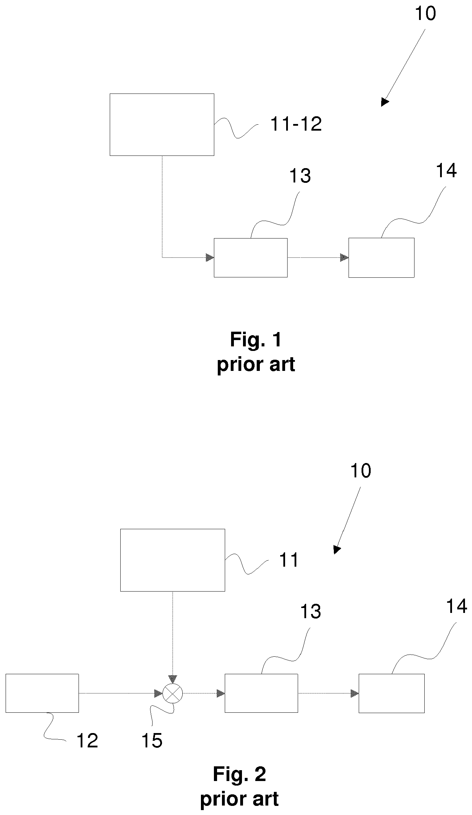

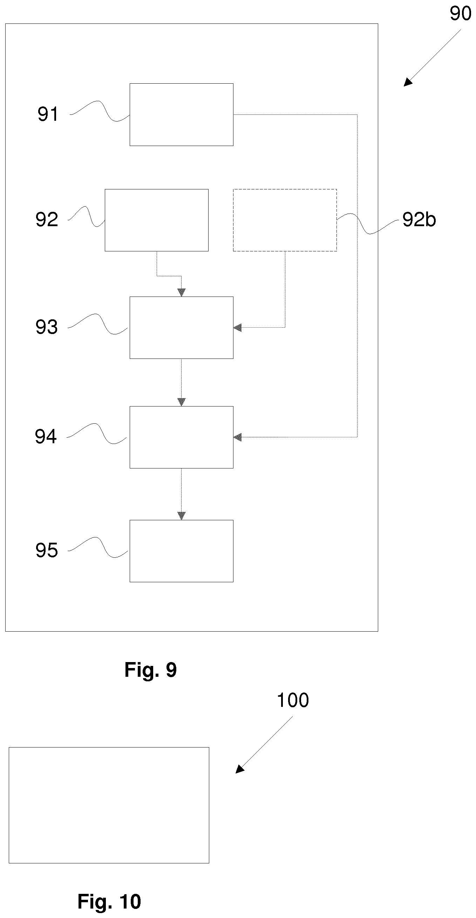

The above, as well as additional objects, features, and advantages of the present invention, will be better understood through the following illustrative and nonlimiting detailed description of preferred embodiments of the present invention, with reference to the appended drawings, wherein the systems of figures 2-8 and the computer-readable medium of figure 10 are illustrated in connection with the method according to the invention.
Fig. 1 is a schematic view of a prior art system for heat treating or pasteurizing a liquid product;
Fig. 2 is a schematic view of another prior art system for heat treating or pasteurizing a liquid product;
Fig. 3 is a schematic view of an embodiment of a system for pasteurizing a liquid product;
Fig. 4 is a schematic view of an embodiment of a system for pasteurizing a liquid product;
Fig. 5 is a schematic view of an embodiment of a system for pasteurizing a liquid product;
Fig. 6 is a schematic view of an embodiment of a system for pasteurizing a liquid product;
Fig. 7 is a schematic view of an embodiment of a system for pasteurizing a liquid product;
Fig. 8 is a schematic view of an embodiment of a system for pasteurizing a liquid product;
Fig. 9 is a flow chart of a method for pasteurizing a liquid product according to an embodiment; and
Fig. 10 illustrates a computer-readable medium according to an embodiment.

### Detailed Description

Figs. 1 and 2 show two commonly known systems 10 for pasteurizing a liquid product. In Fig. 1 the liquid product is provided by means of a liquid product supply 11-12, such as a liquid product tank or conduit. The liquid product is then passed onwards to a heat exchanger 13 where the liquid product is pasteurized and/or sterilized. The pasteurized liquid product is then moved further along the processing line which optionally includes further processing devices 14.

In Fig. 2 the liquid product is mixed and blended in a mixer device 15. In this case there may be provided with a first supply 11 comprising e.g. concentrate, and a second supply 12 comprising water. The mixed liquid product is then heat treated in a heat exchanger for pasteurizing the liquid product, similarly to Fig. 1.

The term "heat treatment" or "heat treated" or "heat treating" used throughout this description should be understood as a process of supplying heat to a composition for decreasing a number or amount of microorganisms in the composition. Hence, one form of heat treatment may be pasteurization in which the composition contains not more than a certain specified amount of microorganisms after pasteurization. Moreover, another form of heat treatment may be sterilization in which the composition essentially contains zero amount of microorganisms after sterilization.

Accordingly, the term heat treated liquid product, as well as the term pasteurized liquid product, should be appreciated as a liquid product in which at least some number or amount of microorganisms has been reduced using supplied heat.

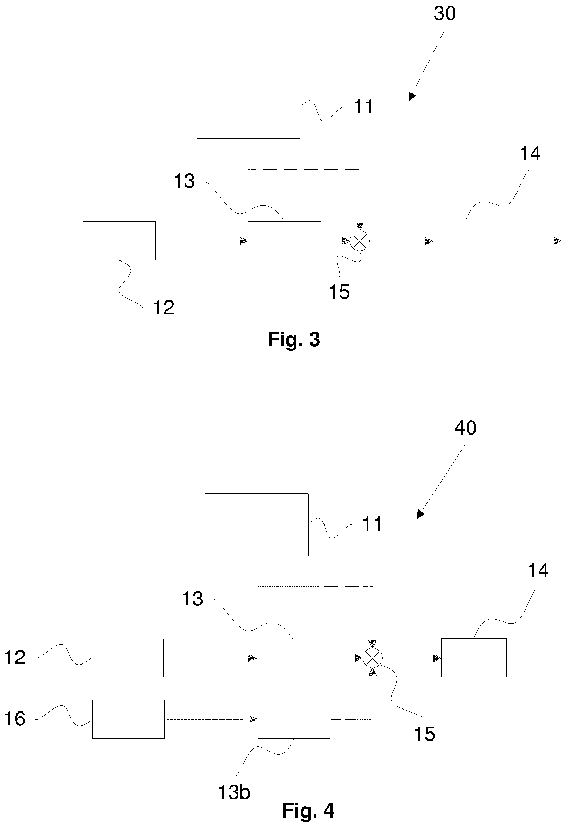

In an embodiment, according to Fig. 3, a system 30 for providing a heat treated liquid product is illustrated in connection with the method according to the invention. The system 30 comprises a first supply 11 comprising a concentrate, having a water content being less than that of the desired heat treated liquid product. Generally, for juice and still drinks the liquid product comprises around 10 to 30% concentrate and 70 to 90 % water and/or sugar solution. The first supply 11 may e.g. be a batch tank, or e.g. upstream liquid product processing equipment capable of supplying a flow of concentrate. The content of the first supply 11 flows in a first stream of the system. The system 30 further comprises a second supply 12 of water and/or sugar solution. The content of the second supply flows in a second stream of the system. The second supply is connected to a heat treatment device 13. The heat treatment device 13 may e.g. comprise a heat exchanger or steam injection device. However, the heat treatment device could also be any other suitable heating device, such as an ohmic heater or a microwave heater or other heating devices having a fast response. The heat treatment equipment 13 is arranged to heat the content, such as water, of the second supply to a desired temperature, such as 95 to 98 ºC at which the content is pasteurized or sterilized. The heat treated water is then pumped to a combiner 15 in which it is combined with the concentrate from the first supply 11 to form a heat treated liquid product. The combiner 15 may comprise a holding cell or optionally the holding cell may be comprised in further processing equipment 14 arranged further downstream.

In an embodiment, which does not form part of the invention, the combiner may be a mixer configured to mix and blend the contents of the streams connected to the combiner to form a heat treated liquid product.

The combiner may also be based on a venturi effect technology for combining the contents of the streams being supplied to the combiner.

In some applications it is desired to have a mixing or combining temperature of 85 to 87 ºC in the combiner and/or holding cell, in order to properly pasteurize the liquid product being combined in the combiner.

In other applications, such as for extended shelf life milk, it may be desired to have a mixing or combining temperature of 120 to 140 ºC in order to properly sterilize the liquid product.

Generally, an aim is to keep the mixing temperature as low as possible to save energy, while allowing for an adequate heat treatment of the liquid product. On the other hand, on a general basis most compounds have a better tendency to mix at increased temperatures.

Some or parts of the liquid product could also be premixed at lower temperatures.

The mixing or combining temperature required is dependent on the type of liquid product to be processed and the temperatures and volumes of the contents of the liquid product when entering the combiner as well as the desired degree of heat treatment.

The pasteurization of the liquid product in the combiner is achievable since the water or sugar solution from the first supply when entering the combiner 15 has a temperature well above 85 to 87 ºC, such as 95 to 98 °C. During the mixing and blending of the water or sugar solution and the concentrate the temperature drops to about 85 to 87 ºC. The mixing ratio between the concentrate and the water and/or sugar solution has impact on the temperature drop in the combiner. Hence, the higher the ratio of concentrate the higher temperature drops in the combiner and vice versa.

In an embodiment, the temperature of the second stream may be determined based on the desired mixing temperature and mixing ratio.

The further processing equipment 14 may e.g. comprise a filling machine for filling the pasteurized liquid product in filling containers. For example, in hot-fill applications, the pasteurized liquid product may be filled immediately following pasteurization in a plastic or glass container.

In some embodiments, and for some liquid products such as juices which are suitable for so called ambient fill the required filling temperature is about 25ºC. For such application the further processing equipment may comprise a further heat exchanger for cooling the pasteurized liquid product from the 85 to 87ºC down to 25ºC, and a filling machine arranged downstream of the further heat exchanger.

The further heat exchanger may be arranged to transport the heat extracted from the liquid product back to the heat exchanger 13 in order to be re-used in the pasteurization of the second stream. Such a solution improves the conservation of energy in the system.

Fig. 4 illustrates a system 40 according to a second embodiment, which does not form part of the invention and which is based on the system of Fig. 1. Here, the second supply 12 is a water supply. Furthermore, a third supply 16 comprising sugar solution is provided. The sugar solution flows in a third stream of the system. The third stream is provided with a separate heat treatment device 13b, such as a heat exchanger. Hence, the separate heat treatment device 13b is arranged to heat the sugar solution separately to pasteurize and/or sterilize the sugar solution. The temperature of the sugar solution after the separate heat treatment device is preferably the same as that of the first stream when entering the combiner, i.e. around 95 to 98ºC. Generally a lower amount of sugar solution provides for improved pasteurization.

The first stream, second stream, and third stream are all connected to the combiner 15 in which the concentrate, water and sugar solution is mixed and blended to form a liquid product. The relatively high temperature of the water and sugar solution allows for the liquid product to be heat treated, e.g. pasteurized, at a mixing temperature at around 85 to 87ºC. Similarly to the system according to Fig. 3, the system according to Fig. 4 may comprise further processing equipment 14 arranged downstream of the combiner.

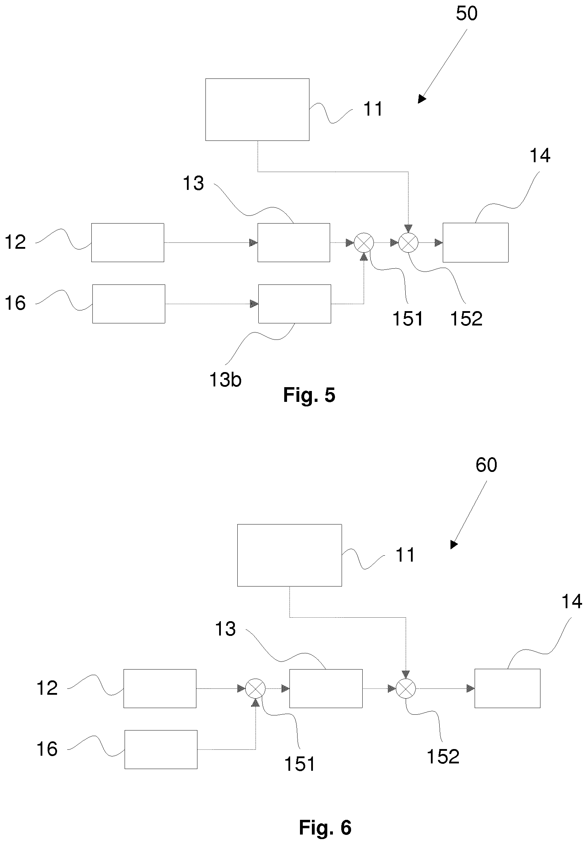

Fig. 5 illustrates a system 50 according to an alternative embodiment to that explained with reference to Fig. 4 and which does not form part of the invention. In this embodiment two separate combiners 151, 152 are arranged in the system. The first combiner 151 is arranged to mix the water from the second stream with the sugar solution from the third stream. The resulting water and sugar solution mix is then pumped to a second combiner 152 where it is mixed and blended with the concentrate of the first stream.

Fig. 6 illustrates a system 60 according to an alternative embodiment to that explained with reference to and which does not form part of the invention. In the system 60 the heat treatment device 13 is arranged to perform heat treatment on both the water and sugar solution. Accordingly, in this embodiment there is no need for a separate heat exchanger being arranged in the third stream as compared to Fig. 4. Instead the water from the second supply 12 and the sugar solution from the third supply 16 are joined into one stream before the heat treatment device 13, such as via a combiner 151. An advantage of the system 60 is that only one heat treatment device is used to pasteurize the water and sugar solution mix. Furthermore, this allows for a less complex system to control the temperature of the water and sugar solution mix leaving the heat treatment device 13.

In each of the previously described embodiments only one stream of concentrate has been shown. In reality some liquid products are prepared using two or more concentrates.

The scope of the present invention is not limited only to one stream of concentrate. Any number of concentrate supplies and /or concentrate streams may be realized without departing from the gist of the present invention.

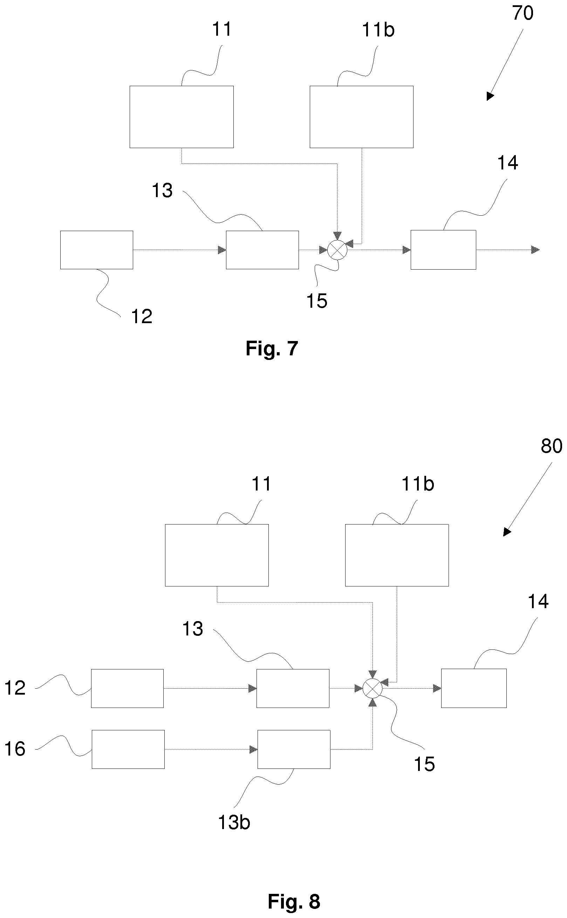

Fig. 7 illustrates a system 70 being similar to that of Fig. 3, but which is provided with a second concentrate supply 11b. System 70 does not form part of the invention. The second concentrate supply may flow through a second concentrate stream and to the combiner 15 in which the first stream of concentrate, the second heated and pasteurized stream of water and the second stream of concentrate is mixed and blended to form the liquid product. Yet again, the excess heat from the heated water stream allows for the liquid product to be pasteurized, without requiring any further heat treatment device being arranged downstream of the combiner.

Fig. 8 illustrates a system 80 being similar to that of Fig. 4, but which is provided with a second concentrate supply 11b. System 80 does not form part of the invention. The second concentrate supply may flow through a second concentrate stream and to the combiner 15 in which the first stream of concentrate, the second heated and pasteurized stream of water, the third stream of sugar solution and the second stream of concentrate is mixed and blended to form the liquid product. Yet again, the excess heat from the heated water stream allows for the liquid product to be pasteurized, without requiring any further heat treatment device being arranged downstream of the combiner.

It should be noted that any embodiment disclosed herein could be arranged with at least one or more concentrate streams.

It should also be appreciated that one or more streams which are heat treated before entering the combiner 15, 151, 152 could be arranged to any embodiment disclosed herein.

In an embodiment, some streams such as particle streams that are e.g. requiring a substantial holding time or heat treatment temperature could be heat treated prior to combining with the other streams.

In an embodiment a method 90 for providing a pasteurized liquid product is provided. The method is shown in Fig. 9 and comprises providing 91 a flow of concentrate having a water content being less than that of the liquid product. Moreover, the method comprises providing 92 a flow of water being separated from said flow of concentrate. Furthermore, the method comprises heating 93 said flow of water for pasteurizing the water. The method further comprises mixing 94 said flow of concentrate with said heated flow of water to form a liquid product. Moreover, the method comprises pasteurizing 95 the liquid product using the heat energy of the heated pasteurized water. The method further comprises providing (92b) a flow of sugar solution and pasteurizing the flow of sugar solution, wherein the step of mixing said flow of concentrate with said flow of water further includes mixing with said flow of sugar solution.

In an embodiment a computer-readable medium having embodied thereon a computer program for processing by a processor is described in connection with the method according to the invention. The computer program comprising code segments arranged, when run by an apparatus having computer-processing properties, for performing all of the steps of the method according to any of the previously described embodiments. The above-described systems and/or methods are used to produce a liquid food product, such as low acid beverage.

Further, the invention has mainly been described with reference to a few embodiments. However, as is readily understood by a person skilled in the art, other embodiments than the ones disclosed above are equally possible within the scope of the invention, as defined by the appended claims.

## Claims

1. A method (90) for providing a heat treated liquid food product, comprising the steps of:
providing (91) a flow of concentrate having a water content being less than that of the liquid food product;
providing (92) a flow of water being separated from said flow of concentrate;
heating (93) the flow of water to a predetermined temperature by using a first heat treatment device (13);
combining (94) the flow of concentrate with the flow of heated water to form a liquid food product;
reducing (95) a number of microorganisms of the liquid food product by means of the heat energy of the heated water;
providing (92b) a flow of sugar solution;
heat treating the flow of sugar solution, wherein the step of combining said flow of concentrate with said flow of water further includes combining with said flow of sugar solution.

2. The method according to claim 1, wherein the step of heat treating the flow of water and/or the step of heat treating the flow of sugar solution is performed by steam injection, or heating by means of a heat exchanger.

3. The method according to claim 1, wherein the predetermined temperature is in the range of 95 to 98 °C.

4. The method according to claim 1, wherein a combining temperature of the liquid food product during heat treatment in the step of combining is in the range of 85 to 87 °C.

5. The method according to claim 1, wherein a combining ratio of the liquid food product between the concentrate and water or sugar solution is in the range of 10 to 30 % concentrate and 70 to 90% water and/or sugar solution.

6. The method according to claim 1, further comprising using a second heat treatment device (13b) for heat treating the sugar solution, wherein the heat treated sugar solution is connected to a combiner (15, 151, 152).

7. The method according to claim 1, further comprising using at least one additional concentrate supply (11b) that is connected to a combiner (15).

8. The method according to claim 1, wherein the flow of sugar solution is connected to the first heat treatment device (13) for heat treating the combined water and sugar solution.

9. The method according to claim 1, further comprising using a heat exchanger (14) that is arranged to receive the heat treated liquid food product and configured to extract heat from the heat treated liquid food product, wherein the extracted heat is brought back to the first heat treatment device (13) to be used in the heat treatment of the water or sugar solution.

## Patentansprüche

1. Verfahren (90) zur Bereitstellung eines wärmebehandelten flüssigen Nahrungsmittels, umfassend die folgenden Schritte:
Bereitstellen (91) eines Konzentratstroms mit einem Wassergehalt, der geringer als der des flüssigen Nahrungsmittels ist;
Bereitstellen (92) eines Wasserstroms, der vom Konzentratstrom getrennt ist;
Erwärmen (93) des Wasserstroms auf eine vorbestimmte Temperatur durch Verwendung einer ersten Wärmebehandlungsvorrichtung (13);
Kombinieren (94) des Konzentratstroms mit dem erwärmten Wasserstrom zur Bildung eines flüssigen Nahrungsmittels;
Reduzieren (95) einer Anzahl von Mikroorganismen des flüssigen Nahrungsmittels durch die Wärmeenergie des erwärmten Wassers;
Bereitstellen (92b) eines Zuckerlösungsstroms;
Wärmebehandeln des Zuckerlösungsstroms, wobei der Schritt des Kombinierens des Konzentratstroms mit dem Wasserstrom ferner das Kombinieren mit dem Zuckerlösungsstrom umfasst.

2. Verfahren nach Anspruch 1, wobei der Schritt des Wärmebehandelns des Wasserstroms und/oder der Schritt des Wärmebehandelns des Zuckerlösungsstroms durch Dampfeinspritzung oder durch Erwärmen mittels eines Wärmetauschers durchgeführt wird bzw. werden.

3. Verfahren nach Anspruch 1, wobei die vorbestimmte Temperatur im Bereich von 95 bis 98°C liegt.

4. Verfahren nach Anspruch 1, wobei eine Kombinationstemperatur des flüssigen Nahrungsmittels während der Wärmebehandlung im Schritt des Kombinierens im Bereich von 85 bis 87°C liegt.

5. Verfahren nach Anspruch 1, wobei ein Kombinationsverhältnis des flüssigen Nahrungsmittels zwischen dem Konzentrat und Wasser oder der Zuckerlösung im Bereich von 10 bis 30% Konzentrat und 70 bis 90% Wasser und/oder Zuckerlösung liegt.

6. Verfahren nach Anspruch 1, ferner umfassend die Verwendung einer zweiten Wärmebehandlungsvorrichtung (13b) zur Wärmebehandlung der Zuckerlösung, wobei die wärmebehandelte Zuckerlösung mit einem Kombinationsmittel (15, 151, 152) verbunden ist.

7. Verfahren nach Anspruch 1, ferner umfassend die Verwendung mindestens einer zusätzlichen Konzentratzufuhr (11b), die mit einem Kombinationsmittel (15) verbunden ist.

8. Verfahren nach Anspruch 1, wobei der Zuckerlösungsstrom zur Wärmebehandlung der Kombination aus Wasser und Zuckerlösung mit der ersten Wärmebehandlungsvorrichtung (13) verbunden ist.

9. Verfahren nach Anspruch 1, ferner umfassend die Verwendung eines Wärmetauschers (14), der zur Aufnahme des wärmebehandelten flüssigen Nahrungsmittels angeordnet ist und der zum Abziehen von Wärme aus dem wärmebehandelten flüssigen Nahrungsmittel ausgelegt ist, wobei die abgezogene Wärme zur ersten Wärmebehandlungsvorrichtung (13) zurückgeführt wird, um in der Wärmebehandlung des Wassers oder der Zuckerlösung verwendet zu werden.

## Revendications

1. Méthode (90) destinée à fournir un produit alimentaire traité thermiquement, comprenant les étapes consistant à :
fournir (91) un courant de concentré dont la teneur en eau est inférieure à celle du produit alimentaire liquide ;
fournir (92) un courant d'eau qui est séparé dudit courant de concentré ;
chauffer (93) le courant d'eau jusqu'à une température prédéterminée à l'aide d'un premier dispositif de traitement thermique (13) ;
combiner (94) le courant de concentré avec le courant d'eau chauffée afin de former un produit alimentaire liquide ;
réduire (95) un nombre de microorganismes du produit alimentaire liquide au moyen de l'énergie thermique de l'eau chauffée ;
fournir (92b) un courant de solution de sucre ;
traiter thermiquement le courant de solution de sucre, où l'étape consistant à combiner ledit courant de concentré avec ledit courant d'eau comporte en outre la combinaison avec ledit courant de solution de sucre.

2. Méthode selon la revendication 1, dans laquelle l'étape de traitement thermique du courant d'eau et/ou l'étape de traitement thermique du courant de solution de sucre est mise en oeuvre par injection de vapeur, ou chauffage à l'aide d'un échangeur thermique.

3. Méthode selon la revendication 1, dans laquelle la température prédéterminée se trouve dans la plage allant de 95 à 98°C.

4. Méthode selon la revendication 1, dans laquelle une température de combinaison du produit alimentaire liquide lors du traitement thermique dans l'étape de combinaison se trouve dans la plage allant de 85 à 87°C.

5. Méthode selon la revendication 1, dans laquelle un rapport de combinaison du produit alimentaire liquide entre le concentré et l'eau ou la solution de sucre se trouve dans la plage allant de 10 à 30% de concentré et de 70 à 90% d'eau et/ou de solution de sucre.

6. Méthode selon la revendication 1, comprenant en outre l'utilisation d'un deuxième dispositif de traitement thermique (13b) pour le traitement thermique de la solution de sucre, où la solution de sucre traitée thermiquement est reliée à un combinateur (15, 151, 152).

7. Méthode selon la revendication 1, comprenant en outre l'utilisation d'au moins une alimentation en concentré supplémentaire (11b) qui est reliée à un combinateur (15).

8. Méthode selon la revendication 1, dans laquelle le courant de solution de sucre est relié au premier dispositif de traitement thermique (13) pour le traitement thermique de l'eau et de la solution de sucre combinées.

9. Méthode selon la revendication 1, comprenant en outre l'utilisation d'un échangeur thermique (14) qui est conçu pour recevoir le produit alimentaire liquide traité thermiquement et configuré afin d'extraire la chaleur à partir du produit alimentaire liquide traité thermiquement, où la chaleur extraite est ramenée vers le premier dispositif de traitement thermique (13) pour être utilisée dans le traitement thermique de l'eau ou de la solution de sucre.
